# FASCICULE DE BREVET EUROPEEN

(11) **EP 2 297 057 B1**
(45) Date de publication et mention de la délivrance du brevet: **25.01.2017**
(21) Numéro de dépôt: 09766052.6
(22) Date de dépôt: 25.05.2009
(51) Int. Cl.: C03C 17/32, C03C 17/42, B65G 49/06, C03C 17/00

(54) **PROTECTION TEMPORAIRE DU VERRE**
TEMPORÄRER GLASSCHUTZ
TEMPORARY PROTECTION OF GLASS

(30) Priorité: 26.05.2008 FR 0853406
(43) Date de publication de la demande: 23.03.2011
(73) Titulaire: Saint-Gobain Glass France, 92400 Courbevoie (FR)
(72) Inventeur: ZAGDOUN, Georges, F-92250 La Garenne Colombes (FR); ROYER, Eddy, F-93250 Villemomble (FR)
(74) Mandataire: Saint-Gobain Recherche
(86) Numéro de dépôt international: PCT/FR2009/050962
(87) Numéro de publication internationale: WO 2009/153490

(56) Documents cités:
- WO-A-00/50354
- WO-A-01/02496
- DE-A1- 2 333 722
- DE-A1- 4 103 283
- FR-A- 2 543 514
- US-A- 4 053 666
- US-A1- 2004 047 997

## Description

L'invention se rapporte au domaine des couches de protection du verre.

Pendant les étapes de fabrication, de transformation, de transport ou de stockage du verre, la surface du verre est susceptible d'être contaminée par divers agents chimiques ou mécaniquement endommagée. A titre d'exemple, la transformation de vitrages en vue de la production de vitrages multiples isolants (doubles ou triples vitrages) met parfois en oeuvre des joints ou mastics à base de silicone. Pendant une certaine période, limitée dans le temps, après la mise en oeuvre, lesdits joints ont tendance à émettre des vapeurs de silicone (monomères ou oligomères n'ayant pas complètement polymérisé), lesquelles migrent à la surface du verre et le contaminent. La couche de silicone est extrêmement adhérente au verre du fait de leur similitude chimique, ce qui complique considérablement les étapes de nettoyage des vitrages. Il convient donc de limiter au maximum les contaminations en silicones.

Ce problème est particulièrement important lorsque l'on cherche à exploiter les propriétés de surface, notamment les propriétés hydrophiles de couches déposées sur le verre. Il est connu par exemple de déposer sur le verre des couches à base d'oxyde de titane photocatalytique. La demande EP-A-0 850 204 décrit par exemple des couches à base d'oxyde de titane qui, par leurs propriétés photocatalytiques et de super-hydrophilie photo-induite, rendent la surface du verre autonettoyante et anti-salissures. La contamination en silicones est alors susceptible de réduire à néant les propriétés de la couche.

Il est donc important de disposer de systèmes permettant de protéger temporairement la surface du verre contre ce type de contaminations.

Il est connu de protéger la surface du verre par des films polymères adhésifs pelables. Ces films peuvent être déposés à l'état solide (comne par exemple dans la demande EP-A-1 610 940), ou à l'état liquide. Dans ce dernier cas, illustré par exemple par le brevet US 5 866 199, une solution de polymères est déposée sur le verre, donnant après polymérisation un film continu adhérent au verre et qui peut s'enlever par pelage. Le dépôt d'un film adhésif à l'état solide nécessite toutefois une installation de dépôt assez complexe. En outre, l'étape de pelage est souvent assez longue et fastidieuse et peut laisser des traces d'adhésifs à la surface du verre.

US 2004/047997 décrit un procédé de traitement anti-saleté (« dirt-repellent ») de surface comprenant le revêtement de la surface avec des particules de diamètre moyen de 3 nm à 5 *µ*m, ayant une énergie de surface d'au moins 20 mN/m et pouvant être faites notamment d'un matériau polymère.

Des films polymères obtenus à partir d'une phase liquide et pouvant être enlevés par nettoyage à l'aide de solutions aqueuses ont été développés. La demande US 2002/0176988 décrit par exemple le dépôt de solutions ou dispersions aqueuses de divers polymères, lesquelles forment des films de protection pouvant être enlevés, pour certains, par lavage à l'eau ou à l'aide de solutions aqueuses basiques. D'une manière générale, les films obtenus à partir de solutions aqueuses de polymères (par exemple de polyvinylalcool comme décrit dans la demande US 2002/0176988 précitée, ou d'acryliques comme dans la demande WO 00/50354) sont facilement éliminables à l'eau, puisque le polymère est lui-même soluble dans l'eau. DE 4103283 décrit une couche pour l'empilement, le transport et le stockage de vitres comprenant des billes polymériques d'un diamètre allant de 0,03 à 0,1 mm. FR 254514 décrit des films contenant des polymères solubles et des particules d'espacement interne, lesquelles pouvant être des billes acryliques. De telles couches sont toutefois peu résistantes et ont tendance à s'éliminer très rapidement, par exemple sous l'action de l'eau de pluie. La protection est par conséquent trop courte et, pour reprendre l'exemple des vitrages multiples autonettoyants, la couche de protection est éliminée avant que les joints de silicone aient fini d'émettre des vapeurs de silicone. L'art antérieur décrit également des films obtenus à partir de dispersions aqueuses, donc de polymères insolubles dans l'eau, qui sont plus durables, mais qui nécessitent l'emploi de solutions basiques (par exemple à base d'hydroxyde d'ammonium, comme décrit dans la demande US 2002/0176988) ou de produits organiques et détergents spéciaux qui vont détacher le film de la surface du verre avant nettoyage à l'eau (comme décrit dans le brevet US 5 453 459). Ces solutions ou détergents sont d'une manipulation délicate et/ou sont relativement nuisibles à l'environnement, et il subsiste donc un besoin de disposer de couches de protection temporaire à la fois suffisamment durables et pouvant être enlevées à l'eau. La couche de protection doit par exemple pouvoir être aisément enlevée par les occupants du logement ou un vitrier après quelques semaines ou mois d'exposition, donc après que les joints silicones auront fini d'émettre des vapeurs de silicone.

L'invention a donc pour but de proposer une couche de protection temporaire du verre présentant une durabilité suffisante mais pouvant être enlevée à l'aide d'eau pure.

A cet effet, l'invention a pour objet un substrat en verre revêtu d'une couche de protection temporaire continue éliminable à l'eau, ladite couche étant essentiellement constituée d'un empilement de particules polymériques colloïdales discernables. Les particules polymériques sont de préférence constituées d'un polymère solide et insoluble dans l'eau.

L'invention a également pour objet le procédé d'obtention dudit substrat. Il s'agit notamment d'un procédé de revêtement d'un substrat en verre par une couche de protection temporaire continue, dans lequel on dépose sur au moins une surface dudit substrat une dispersion aqueuse de particules colloïdales d'au moins un polymère solide et insoluble dans l'eau, puis l'on sèche la couche ainsi obtenue à une température supérieure à la température de transition vitreuse dudit au moins un polymère et inférieure ou égale à 50°C.

On appellera par la suite « dispersion aqueuse colloïdale » la dispersion dans l'eau de particules colloïdales.

Dans la suite du texte, les modes de réalisation préférés s'appliquent de la même manière aux deux objets de l'invention : le substrat revêtu et son procédé d'obtention.

L'invention consiste donc à déposer sur le substrat de verre une couche faiblement adhérente simplement constituée d'un empilement de petites sphères dures en polymère. Ces sphères dures n'établissant pas de liaisons chimiques fortes, ni entre elles ni avec la surface du verre, la couche obtenue est susceptible d'être aisément éliminée à l'aide d'eau pure, froide ou tiède, sans avoir besoin de solutions fortement basiques ou de composés organiques potentiellement polluants. La cohésion de la couche est tout de même assurée par des forces faibles, du type forces de van der Waals ou forces électrostatiques, et leur résistance à l'abrasion et au frottement est remarquable. La couche selon l'invention est dé préférence résistante à l'abrasion, au sens où elle résiste à au moins 500 cycles, voire au moins 2000 cycles, selon le test décrit dans la norme EN 1096-2, explicité dans la suite du texte.

Les couches protectrices de l'art antérieur et obtenues à partir de dispersions aqueuses de polymères insolubles dans l'eau présentent en revanche une cohésion assez forte, due probablement à des réactions chimiques de polymérisation ou des phénomènes de fusion partielle et collage des particules, et qui nécessite l'emploi de solutions basiques ou de produits organiques spéciaux.

Par « essentiellement constituée », on entend que la couche de protection peut éventuellement comprendre d'autres composés, à titre de traces, et qui n'influent pas sur la manière dont la couche résout le problème technique à la base de l'invention. De préférence, la couche selon l'invention est constituée d'un empilement de particules polymériques colloïdales discernables.

La dispersion aqueuse colloïdale est de préférence constituée d'eau et des particules colloïdales polymériques, à l'exclusion donc de tout autre agent chimique (comme par exemple des pigments, des liants, des plastifiants...). De même, la dispersion aqueuse colloïdale est de préférence le seul composé utilisé pour former la couche temporaire de protection.

Le séchage est réalisé à une température supérieure à la température de transition vitreuse du polymère de manière à obtenir une couche continue. Il a en effet été observé qu'en-dessous de cette température de transition vitreuse le séchage s'accompagnait de la création de fissures, détruisant le caractère continu de la couche dé protection. Le séchage est en revanche réalisé à une température d'au plus 50°C de manière à conserver des particules bien discernables, qui ne coalescent pas entre elles au moment du séchage. Une température trop élevée risque en effet de créer un film constitué non plus de petites sphères dures discernables mais de particules collées entre elles, au détriment de la facilité d'élimination ultérieure. Le séchage est de préférence réalisé à une température proche de la température ambiante ou à une température légèrement supérieure, par exemple entre 25 et 35°C. De préférence, aucun moyen de chauffage (comme par exemple des lampes infrarouge) et/ou aucun moyen de séchage forcé, comme des systèmes de ventilation, de soufflage d'air chaud ou froid, n'est employé, à l'exception éventuellement de moyens de séchage doux (à des températures légèrement au-dessus de la température ambiante), lesquels peuvent mettre en oeuvre un séchage à l'air chaud ou quelques lampes infrarouge. Un chauffage ou un séchage trop long ou trop fort risque en effet de former des films dans lesquels les particules polymériques ne seront plus discernables, mais seront collées entre elles, en partie voire totalement fondues, les films obtenus étant ensuite difficiles à éliminer. Les moyens de chauffage ou de séchage forcé sont la plupart du temps inutiles, puisqu'il a été observé que le séchage des couches pouvait se faire très naturellement en quelques minutes, typiquement moins de 3 minutes, voire moins de 2 minutes.

D'une manière générale, il est préféré que la forme et la taille des particules colloïdales ne soient pas substantiellement modifiées par le séchage. Cette caractéristique est en général une preuve de l'absence de liaisons fortes entre les particules, qui est déterminante pour obtenir l'effet souhaité d'élimination à l'eau. Elle est en général obtenue par un séchage rapide et à une température qui ne soit pas trop élevée par rapport à la température de transition vitreuse du polymère.

Le diamètre moyen des particules polymériques colloïdales dans la dispersion aqueuse colloïdale et/ou dans la couche temporaire, est de préférence compris entre 40 et 500 nm, notamment entre 50 et 300 nm, et même entre 80 et 250 nm.

Le polymère est de préférence un polymère ou un copolymère acrylique, par exemple un copolymère styrène-acrylique. Ce type de polymères présente l'avantage d'adhérer très faiblement à la surface du verre, ce qui permet une élimination aisée de la couche. En outre, les dispersions acryliques sont facilement obtenues par des réactions de polymérisation en émulsion qui procurent des particules de taille contrôlée et reproductible. D'autres types de polymères sont utilisables, par exemple les polyuréthanes. Ces polymères n'ont pas d'affinité chimique particulière avec les silicones, et il a été observé que les silicones ne migraient pas et ne se greffaient pas sur ce type de polymères, ce qui constitue un avantage supplémentaire de la couche de protection selon l'invention.

Le polymère employé dans la dispersion est de préférence totalement polymérisé, afin d'éviter toute réaction de polymérisation entre les différentes particules lors du séchage et/ou ultérieurement. Ces réactions chimiques augmenteraient en effet de manière indésirable la cohésion du film et empêcheraient l'élimination à l'aide d'eau pure.

La température de transition vitreuse du ou de chaque polymère est de préférence inférieure ou égale à 30°C et/ou supérieure ou égale à 20°C. Il a en effet été observé que la température de transition vitreuse influait sur la résistance à l'eau des couches obtenues. Lorsque la température de transition vitreuse du polymère est inférieure à environ 20°C, la couche est plus facilement éliminable à l'eau froide. Pour des températures de transition vitreuse plus élevées (qui nécessitent donc un séchage à une température plus élevée), la couche obtenue est plus résistante à l'eau froide (et résistera donc mieux aux précipitations), mais peut être éliminée à l'aide d'eau tiède.

On peut déposer la dispersion aqueuse colloïdale par diverses techniques, telles que l'aspersion (« flow coating »), le trempage (« dip-coating »), le rideau ou le pistoletage (« spray-coating »).

Pour assurer une protection optimale, l'épaisseur de la couche de protection temporaire (le cas échéant après séchage) est de préférence comprise entre 2 et 100 micromètres, notamment entre 5 et 50 micromètres, voire entre 10 et 30 micromètres.

Le substrat en verre est généralement un vitrage, tel qu'un vitrage plan ou bombé, simple ou multiple (double, triple...), un vitrage trempé ou recuit, un vitrage incolore ou teinté, dont l'épaisseur est notamment comprise entre 1 et 19 mm, plus particulièrement entre 2 et 10 mm, voire entre 3 et 6 mm. Ce substrat ou vitrage peut être lui-même recouvert sur au moins une des ses faces de couches ou empilements de couches minces conférant des propriétés optiques (couches miroirs ou antireflets...), thermiques (couches bas-émissives ou antisolaires, notamment à base de couches d'argent), électriques (couches antistatiques, couches conductrices transparentes). Dans ce cas, la couche de protection temporaire protège également les couches déposées sur le substrat.

La couche de protection peut revêtir l'une des surfaces, ou les deux surfaces du vitrage.

Le substrat à revêtir comprend de préférence sous la couche de protection temporaire au moins une couche hydrophile, notamment une couche à base d'oxyde de titane photocatalytique. La couche hydrophile est de préférence au contact de la couche de protection temporaire. Les couches hydrophiles sont en effet les couches les plus susceptibles de voir leurs fonctionnalités affectées par des pollutions extérieures comme les silicones. La couche à base d'oxyde de titane est de préférence la dernière couche déposée sur le substrat avant le dépôt de la couche de protection temporaire selon l'invention. La couche à base d'oxyde de titane peut être constituée d'oxyde de titane, déposée notamment par procédé sol-gel, procédé de dépôt chimique en phase vapeur (CVD) ou procédé de pulvérisation cathodique (par exemple procédé magnétron). La couche à base d'oxyde de titane peut, alternativement être composée de particules d'oxyde de titane incorporées dans un liant minéral, par exemple un liant de silice obtenu par un procédé du type sol-gel. La couche hydrophile, et notamment s'il s'agit d'une couche à base d'oxyde de titane photocatalytique, est de préférence déposée sur une sous-couche faisant office de barrière à la migration des ions alcalins, notamment une couche en dérivé du silicium, tel qu'oxyde, nitrure ou oxycarbure de silicium, ou l'un quelconque de leurs mélanges. Alternativement ou cumulativement, la couche hydrophile, notamment à base d'oxyde de titane photocatalytique, peut être combinée avec d'autres types de sous-couches, notamment des couches à fonction optique (antireflets, ou couches atténuant la réflexion de l'oxyde de titane), ou encore thermique (couches antisolaires, bas émissives, notamment du type comprenant au moins une couche mince d'argent ou une couche conductrice transparente).

La couche de protection selon l'invention résiste au frottement et à l'abrasion. Elle peut donc être déposée au moment de la fabrication des vitrages et résiste au stockage, à la transformation, au transport et à l'installation sur site. On peut par exemple déposer la couche de protection selon l'invention juste après le dépôt de couches minces sur le verre. Dans le cas de vitrages isolants (vitrages multiples, notamment doubles vitrages ou triples vitrages), la couche de protection selon l'invention peut être déposée à divers stades de la transformation. Un vitrage multiple est obtenu en assemblant plusieurs feuilles de verre, généralement deux, voire trois, autour d'un cadre périphérique généralement métallique, à l'aide d'un joint en butyl. Ce joint est quant à lui protégé par un mastic périphérique enduit sur la totalité de la tranche du vitrage isolant. Dans le cas de vitrages isolants dits structuraux, au sens où ces vitrages ne sont pas insérés dans la feuillure de châssis, le mastic périphérique est généralement en silicone. Dans ce cas, il est préférable que la couche protectrice selon l'invention soit déposée avant cette étape d'enduction pour protéger la fonction hydrophile contre les vapeurs de silicones, soit juste avant l'assemblage des feuilles et du cadre, soit juste après cet assemblage. Dans le cas de vitrages destinés à être insérés dans des châssis, par exemple à base de PVC, aluminium ou bois, le mastic périphérique n'est généralement pas à base de silicone. Dans ce cas, il est préférable et plus simple de déposer la couche protectrice après l'enduction du mastic, donc en dernière étape du procédé de fabrication du vitrage isolant. Elle peut alternativement être déposée avant l'assemblage ou l'enduction. Ainsi, le vitrage isolant reste protégé pendant toutes les étapes suivantes : stockage, transport vers le chantier, installation sur site, étapes pendant lesquelles le vitrage peut être soumis à des pollutions accidentelles, notamment en silicones.

La couche de protection peut être déposée sur la surface d'un vitrage revêtu d'une couche d'oxyde de titane photocatalytique, ledit vitrage étant destiné à équiper un vitrage double ou triple et la couche photocatalytique étant située vers l'extérieur du bâtiment. La couche de protection temporaire peut être éliminée après l'installation sur site ou conservée pendant quelques semaines, le temps que les joints en silicone du vitrage multiple aient fini d'émettre des vapeurs de silicone. Une fois cette période passée, la couche de protection temporaire ayant protégé le vitrage contre les vapeurs de silicones, peut être facilement éliminée à l'eau, froide ou tiède.

L'invention a encore pour objet un procédé de mise en oeuvre de la couche de protection temporaire selon l'invention, dans lequel on utilise ladite couche de protection pour protéger temporairement la surface de vitrages, puis l'on élimine ladite couche de protection temporaire à l'aide d'eau froide ou tiède. L'eau est de préférence pure, au sens où elle ne comprend pas de composés organiques (par exemple des détergents), ou inorganiques (par exemples des sels d'ammonium) à l'exception de traces difficilement évitables. Le pH de l'eau employée est de préférence compris entre 6 et 8, notamment entre 6,5 et 7,5. Le pH peut parfois être inférieur à 6, notamment dans le cas d'eau déionisée.

Il va de soi que les différentes combinaisons des caractéristiques préférées de l'invention constituent elles-mêmes des modes de réalisation préférés de l'invention.

L'invention sera mieux comprise à la lumière de la figure et des exemples non-limitatifs qui suivent.

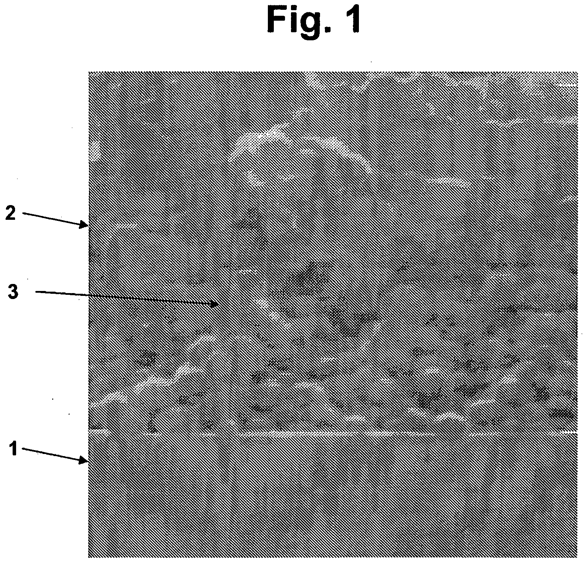

La Figure 1 représente une vue prise par microscopie électronique à balayage d'une coupe d'un échantillon de verre recouvert d'une couche de protection selon l'invention. On voit sur la figure 1 une partie du substrat de verre 1 recouvert d'une couche de protection 2 selon l'invention, dont seule une partie est visible sur la figure. La couche de protection 2 est constituée par un assemblage d'une multitude de particules colloïdales 3, parfaitement discernables.

### EXEMPLE 1

Le substrat de verre à revêtir est un substrat en verre plan d'environ 6 mm d'épaisseur et obtenu par un procédé de type « float » (procédé de flottage qui consiste à déverser le verre en fusion sur un bain d'étain). Ce substrat a été préalablement revêtu d'une couche d'oxycarbure de silicium (SiOC), elle-même surmontée d'un couche d'oxyde de titane photocatalytique de 15 nm d'épaisseur. Ces deux couches sont obtenues par un procédé du type CVD, dans lequel des précurseurs organométalliques ou halogénures sont apportés en phase gazeuse à proximité du ruban de verre chaud après le formage par flottage.

La dispersion colloïdale employée est une dispersion aqueuse d'un copolymère acrylique commercialisée sous la dénomination NéoCryl XK-240 par la société DSM NeoResins. Cette dispersion est composée pour 48% en poids d'eau et pour 52% en poids de particules d'un copolymère acrylique dont le diamètre moyen est d'environ 180 nm (mesuré par des méthodes connues, mettant en oeuvre la diffusion de la lumière). La température de transition vitreuse du polymère est de -4°C. La viscosité de la dispersion à 25°C est de 160 mPa.s et son pH de 7,5.

La dispersion est déposée sur le substrat de verre par trempage, et après séchage à température ambiante sans ventilation forcée pendant quelques minutes (typiquement 2 à 3 minutes), la couche obtenue est continue, d'épaisseur environ 20 micromètres. La transmission lumineuse de la couche de protection est de l'ordre de 88%, lé flou de l'ordre de 30%.

La couche est résistante à l'abrasion au sens de la norme EN 1096-2. Le test consiste à appliquer sur une partie de la surface revêtue de 9,4 cm de longueur - cette partie étant appelée piste - un feutre de 14 mm de diamètre, 10 mm d'épaisseur et 0,52 g/cm? de masse volumique, sous une charge de 39,22 MPa (400 g/cm²), le feutre étant soumis à une translation (50 allers-retours sur toute la longueur de piste par minute) combinée à une rotation de 6 tours/min (1 cycle = 1 aller-retour). La couche selon l'invention résiste à au moins 2000 cycles.

La couche de protection temporaire peut néanmoins être très facilement éliminée par aspersion d'eau pure (non additionnée d'additifs organiques) à température ambiante.

Des essais permettant de caractériser la contamination aux silicones ont également été réalisés. Ces essais consistent à placer le substrat revêtu de l'exemple 1 au contact d'un cordon de silicone (référence Dow Corning. 787s) et à mesurer l'angle de contact à l'eau après 7 jours. Un exemple comparatif est également testé en parallèle ; il s'agit d'un substrat non revêtu par la couche de protection selon l'invention. Après 7 jours, l'angle de contact à l'eau pour l'exemple comparatif passe de 30° à plus de 75°, ce qui témoigne d'une contamination assez forte en vapeurs de silicone. Au contraire, l'angle de contact à l'eau de l'échantillon de l'exemple 1 reste stable, en-dessous de 35°. Ce résultat montre clairement que les vapeurs de silicone ne se greffent pas sur la couche de protection selon l'invention.

### EXEMPLE 2

Le substrat à revêtir est identique à celui employé dans le cas d'exemple 1.

La dispersion colloïdale employée est une dispersion aqueuse d'un copolymère acrylique commercialisée sous la dénomination NéoCryl XK-87 par la société DSM NeoResins. Cette dispersion est composée pour 49% en poids d'eau et pour 51% en poids de particules d'un copolymère styrène - acrylique dont le diamètre moyen est d'environ 210 nm. La température de transition vitreuse du polymère est de 24°C. La viscosité de la dispersion à 25°C est de 250 mPa.s et son pH de 7,4.

Cette dispersion est appliquée comme dans le cas de l'exemple 1, mais le séchage est ici réalisé à 35°C, afin de conserver une température supérieure à la température de transition vitreuse du polymère. Un dépôt à une température plus basse (par exemple 20°C) conduit à une couche non continue.

Les propriétés optiques et de résistance au frottement sont similaires à celles de l'exemple 1. La couche est toutefois résistante à l'eau froide, et peut donc résister aux intempéries. En revanche, la couche est facilement éliminable à l'aide d'eau tiède (environ 30 à 35°C) en appliquant un léger frottement à l'aide d'une éponge ou d'un chiffon.

### EXEMPLE COMPARATIF

Le substrat à revêtir est identique à celui employé dans le cas de l'exemple 1.

La dispersion colloïdale employée est une dispersion aqueuse d'un copolymère acrylique commercialisée sous la dénomination NéoCryl XK-52 par la société DSM NeoResins.

Cette dispersion est composée pour 60 % en poids d'eau et pour 40 % en poids de particules d'un copolymère acrylique dont le diamètre moyen est d'environ 70 nm. La température de transition vitreuse du polymère est de 115°C. La viscosité de la dispersion à 25°C est de 15 mPa.s et son pH de 5.1.

Cette dispersion est appliquée comme dans le cas de l'exemple 1, et le séchage est ici réalisé à 35°C comme dans l'exemple 2. Le dépôt, réalisé à une température inférieure à la température de transition vitreuse du polymère, conduit à une couche non continue, constituée de domaines dont la taille est de l'ordre de la dizaine de micromètres, séparés par des fissures. Une telle couche non-continue ne peut pas protéger efficacement la surface du substrat, en particulier contre la pollution résultant de la migration des vapeurs de silicones.

## Revendications

1. Substrat en verre (1) revêtu d'une couche de protection temporaire continue (2) éliminable à l'eau, ladite couche (2) étant essentiellement constituée d'un empilement de particules polymériques colloïdales discernables (3).

2. Substrat selon la revendication 1, tel que le diamètre moyen des particules polymériques (3) est compris entre 40 et 500 nm.

3. Substrat selon la revendication précédente, tel que le diamètre moyen des particules polymériques (3) est compris entre 50 et 300 nm.

4. Substrat selon l'une des revendications précédentes, tel que le polymère est un polymère ou un copolymère acrylique.

5. Substrat selon la revendication précédente, tel que le polymère est un copolymère styrène-acrylique.

6. Substrat selon l'une des revendications précédentes, tel que la température de transition vitreuse du ou de chaque polymère est inférieure ou égale à 30°C.

7. Substrat selon l'une des revendications précédentes, tel que l'épaisseur de la couche de protection temporaire (2) est comprise entre 2 et 100 micromètres, notamment entre 5 et 50 micromètres.

8. Substrat selon l'une des revendications précédentes, comprenant sous la couche de protection temporaire (2) au moins une couche hydrophile.

9. Substrat selon la revendication précédente, tel que la couche hydrophile est une couche à base d'oxyde de titane photocatalytique.

10. Substrat, selon la revendication 8 ou 9, tel que la couche hydrophile est déposée sur une sous-couche faisant office de barrière à la migration des ions alcalins, notamment une couche en oxyde, nitrure ou oxycarbure de silicium, ou l'un quelconque de leurs mélanges.

11. Procédé de revêtement d'un substrat en verre (1) par une couche de protection temporaire continue (2) eliminable à l'eau, dans lequel on dépose sur au moins une surface dudit substrat une dispersion aqueuse de particules colloïdales (3) d'au moins un polymère solide et insoluble dans l'eau, puis l'on sèche la couche ainsi obtenue à une température supérieure à la température de transition vitreuse dudit au moins un polymère et inférieure ou égale à 50°C.

12. Procédé selon l'une des revendications de procédé précédentes, tel que la dispersion aqueuse est constituée d'eau et desdites particules colloïdales polymériques (3).

13. Procédé selon l'une des revendications de procédé précédentes, tel que la forme et la taille des particules colloïdales (3) ne sont substantiellement pas modifiées par le séchage.

14. Procédé selon l'une des revendications de procédé précédentes, tel que l'on dépose la dispersion aqueuse colloïdale par aspersion, trempage, au rideau, ou par pistoletage.

15. Procédé de mise en oeuvre de la couche de protection temporaire (2) décrite dans l'une des revendications 1 à 10 ou obtenue selon l'une des revendications 11 à 14, dans lequel on utilise ladite couche de protection (2) pour protéger temporairement la surface de vitrages, puis l'on élimine ladite couche de protection temporaire (2) à l'aide d'eau froide ou tiède.

## Patentansprüche

1. Glassubstrat (1), das mit einer durchgehenden temporären Schutzschicht (2), die mit Wasser zu entfernen ist, überzogen ist, wobei die Schicht (2) im Wesentlichen aus einer Stapelung von erkennbaren kolloidalen Polymerpartikeln (3) gebildet ist.

2. Substrat nach Anspruch 1, bei dem der durchschnittliche Durchmesser der Polymerpartikel (3) zwischen 40 und 500 nm beträgt.

3. Substrat nach dem vorhergehenden Anspruch, bei dem der durchschnittliche Durchmesser der Polymerpartikel (3) zwischen 50 und 300 nm beträgt.

4. Substrat nach einem der vorhergehenden Ansprüche, bei dem das Polymer ein Acryl-Polymer oder - Copolymer ist.

5. Substrat nach dem vorhergehenden Anspruch, bei dem das Polymer ein Styrol-Acryl-Copolymer ist.

6. Substrat nach einem der vorhergehenden Ansprüche, bei dem die Glasübergangstemperatur des oder jedes Polymers kleiner oder gleich 30°C ist.

7. Substrat nach einem der vorhergehenden Ansprüche, bei dem die Dicke der temporären Schutzschicht (2) zwischen 2 und 100 Mikrometer, insbesondere zwischen 5 und 50 Mikrometer, beträgt.

8. Substrat nach einem der vorhergehenden Ansprüche, umfassend unter der temporären Schutzschicht (2) mindestens eine hydrophile Schicht.

9. Substrat nach dem vorhergehenden Anspruch, bei dem die hydrophile Schicht eine Schicht auf Basis von fotokatalytischem Titanoxid ist.

10. Substrat nach Anspruch 8 oder 9, bei dem die hydrophile Schicht auf eine Unterschicht, die als Barriere für die Migration der alkalischen Ionen dient, insbesondere eine Schicht aus Oxid, Nitrid oder Silizium-Oxycarbid oder einer ihrer Mischungen, aufgebracht wird.

11. Verfahren zum Überziehen eines Glassubstrats (1) mit einer durchgehenden temporären Schutzschicht (2), die mit Wasser zu entfernen ist, bei dem auf mindestens eine Fläche des Substrats eine wässerige Dispersion von kolloidalen Partikeln (3) mindestens eines festen Polymers und in Wasser nicht löslich aufgebracht wird, dann die so erhaltene Schicht bei einer Temperatur über der Glasübergangstemperatur des mindestens einen Polymers und kleiner oder gleich 50°C getrocknet wird.

12. Verfahren nach einem der vorhergehenden Verfahrensansprüche, bei dem die wässerige Dispersion von Wasser und den kolloidalen Polymerpartikeln (3) gebildet ist.

13. Verfahren nach einem der vorhergehenden Verfahrensansprüche, bei dem die Form und die Größe der kolloidalen Partikel (3) durch das Trocknen nicht wesentlich verändert werden.

14. Verfahren nach einem der vorhergehenden Verfahrensansprüche, bei dem die wässerige kolloidale Dispersion durch Besprühen, Eintauchen, im Vorhangverfahren oder mit einer Spritzpistole aufgebracht wird.

15. Verfahren zum Einsatz der temporären Schutzschicht (2), die in einem der Ansprüche 1 bis 10 beschrieben ist und nach einem der Ansprüche 11 bis 14 erhalten wird, bei dem die Schutzschicht (2) verwendet wird, um temporär die Verglasungsfläche zu schützen, dann die temporäre Schutzschicht (2) mit Hilfe von kaltem oder lauwarmem Wasser entfernt wird.

## Claims

1. A glass substrate (1) coated with a continuous temporary protection film (2) which can be removed with water, said film (2) essentially consisting of a stack of discernible colloidal polymer particles (3).

2. The substrate according to claim 1, wherein the average diameter of the polymer particles (3) is between 40 and 500 nm, especially between 50 and 300 nm.

3. The substrate according to the preceding claim, wherein the average diameter of the polymer particles (3) is between 50 and 300 nm.

4. The substrate according to one of the preceding claims, wherein the polymer is an acrylic polymer or copolymer.

5. The substrate according to one of the preceding claims, wherein the polymer is a styrene-acrylic copolymer.

6. The substrate according to one of the preceding claims, wherein the glass transition temperature of the or each polymer is less than or equal to 30°C.

7. The substrate according to one of the preceding claims, wherein the thickness of the temporary protection film (2) is between 2 and 100 microns, especially between 5 and 50 microns.

8. The substrate according to one of the preceding claims, comprising, beneath the temporary protection film (2), at least one hydrophilic film.

9. The substrate according to the preceding claim, wherein the hydrophilic film is a film based on photocatalytic titanium oxide.

10. The substrate according to claim 8 or 9, wherein the hydrophilic film is is deposited on an underlayer acting as barrier to the migration of alkali metal ions, especially an underlayer made of a silicon derivative, such as silicon oxide, nitride or oxycarbide, or any mixture thereof

11. A process for coating a glass substrate (1) with a continuous temporary protection film (2), wherein an aqueous dispersion of colloidal particles (3) of at least one water-insoluble solid polymer is deposited on at least one surface of said substrate, and then the film thus obtained is dried at a temperature above the glass transition temperature of said at least one polymer but not exceeding 50°C.

12. The process according to the preceding process claim, wherein the aqueous dispersion consists of water and said colloidal polymer particles (3).

13. The process according to one of the preceding process claims, wherein the shape and the size of the colloidal particles (3) are substantially not modified by the drying.

14. The process according to one of the preceding process claims, wherein the aqueous colloidal dispersion is deposited by flow coating, dip coating, curtain coating or spray coating.

15. A method of using the temporary protection film (2) described in one of claims 1 to 10 or obtained according to one of claims 10 to 14, in which said protection film (2) is used for temporarily protecting glazing surfaces, and then said temporary protection film (2) is removed using cold or warm water.
